# EUROPÄISCHE PATENTSCHRIFT

(11) **EP 1 778 458 B1**
(45) Veröffentlichungstag und Bekanntmachung des Hinweises auf die Patenterteilung: **25.03.2009**
(21) Anmeldenummer: 05769647.8
(22) Anmeldetag: 14.07.2005
(51) Int. Cl.: B29C 70/02, B29C 70/08

(54) **VERFAHREN ZUR HERSTELLUNG EINES FASERVERBUNDWERKSTOFFES ZUR HERSTELLUNG VON FASERVERBUNDBAUTEILEN**
METHOD FOR PRODUCING A FIBRE-COMPOSITE MATERIAL FOR PRODUCING FIBRE-COMPOSITE COMPONENTS
PROCEDE POUR REALISER UN MATERIAU COMPOSITE FIBREUX ENTRANT DANS LA FABRICATION D'ELEMENTS COMPOSITES FIBREUX

(30) Priorität: 21.08.2004 DE 102004040555; 29.10.2004 DE 102004052552; 04.01.2005 DE 102005000683
(43) Veröffentlichungstag der Anmeldung: 02.05.2007
(73) Patentinhaber: SAERTEX GmbH & Co. KG, 48369 Saerbeck (DE)
(72) Erfinder: ROTH, Ekkehard, 21423 Winsen a.d. Luhe (DE)
(74) Vertreter: Habbel, Hans-Georg
(86) Internationale Anmeldenummer: PCT/DE2005/001247
(87) Internationale Veröffentlichungsnummer: WO 2006/021172

(56) Entgegenhaltungen:
- WO-A-02/16115
- WO-A-92/00182
- DE-A1- 19 809 264
- US-A- 4 713 283
- US-A- 5 432 010
- US-A1- 2004 126 554

## Beschreibung

Die Erfindung bezieht sich auf ein Verfahren zur Herstellung eines Faserverbundwerkstoffes zur Herstellung von Faserverbundbauteilen.

Dieser Faserverbundwerkstoff besteht aus den Verstärkungsfasern und einer Matrix mit beigefügten Füllstoffen, wobei die Matrix ein Harzsystem ist. Der Einsatz von Füllstoffen in der Verbindung mit Reaktionsharzen kommt dabei in großem Umfang zur Anwendung.

Als Füllstoffe werden üblicherweise benutzt: Calciumkarbonat, Dolomid, Kaolin, Talkum, Quarz, Wollastonit, Aluminiumhydrat, Antimontrioxid, Schwerspat oder Glashohlkugeln.

Aus der
WO 92/00182 A (FLEXLINE SERVICES LTD ; DE JAGER, GUI, GERARD) 9 January 1992 (1992-01-09) oder
US 2004/126554 A1 (KITANO KATSUHISA ET AL) 1 July 2004 (2004-07-01) oder
WO 02/16115 A (SKINNER, LEE, MARTIN; TOWERS; GRAHAM, FRANK; TALWAR, AJAY) 28 February 2002 (2002-02-28) oder der
US-A-4 713 283 (COGSWELL ET AL) 15 December 1987 (1987-12-15)
   sind Verfahren zur Herstellung eines Faserverbundwerkstoffes bekannt, der aus Verstärkungsfasern, Harz und einem Füllstoff besteht. Der Füllstoff besteht aus kurzen Fasern oder aus Partikeln.

Mit dem Einsatz der bisher im Stand der Technik bekannten Füllstoffe ist aber keine spiegelglatte Oberfläche des Faserverbundbauteiles erzielbar, d. h. eine Oberfläche, die den heutigen Anforderungen der Klasse A "Sichtbauteil" im Fahrzeugbau entspricht.

Der Erfindung liegt daher die Aufgabe zugrunde, ein Verfahren vorzuschlagen, mit dem bessere mechanische und optische Eigenschaften (Klasse A Oberflächen) an Faserverbundbauteilen realisiert werden können und zudem schneller, d. h. damit kostengünstiger als bisher üblich produziert werden kann.

Durch den Einsatz von Füllstoffen aus den eigentlichen Verstärkungsfasern, z. B. Carbonfasern, wird ein wesentlich homogeneres Bauteil mit vorteilhafteren Eigenschaften als bisher üblich möglich. Die Bauteiloberfläche wird zudem sehr glatt, eine Oberfläche der Güteklasse A ist somit erreichbar, was eine wesentliche Anforderung an Sichtbauteilen im Fahrzeugbau ist. Es treten keine negativen Spannungen bei Wärme oder Kälte auf, das Bauteil ist später einfacher und auch kostengünstiger zu recyceln.

Dem Harz, vorzugsweise aus hochreaktiven Reaktionsharzen bestehend, d. h. der späteren Matrix, wird als Füllstoff ein Material zugesetzt, welches aus dem Material der eigentlichen Verstärkungsfasern besteht. Das Fasermaterial wird dazu fein gemahlen oder geschnitten und dem Harz beigemischt. Das Mahlgut hat vorzugsweise eine Größe kleiner als 2 mm und die Schnittfasern haben vorzugsweise eine Größe kleiner als 20 mm.

Die Erfindung bezieht sich weiterhin auf einen Harzfilm mit einem oder beiden dieser vorgenannten Füllstoffe, d. h. dem Mahlgut oder den Schnittfasern aus den eigentlichen Verstärkungsfasern des Faserverbundbauteiles. Dieser Harzfilm kann mit textilen Halbzeugen, z. G. Geweben, Geflechten, Gewirken, unidirektionalen oder multiaxialen Gelegen kombiniert werden.

Es ist auch möglich, den Füllstoff mit einem herkömmlichen Prepreg zu kombinieren, in dem der Füllstoff auf das Prepreg aufgestreut oder aufgeblasen wird.

Weiterhin ist es möglich, das Harzfüllstoffgemisch mittels eines Sprühverfahrens auf textile Halbzeuge, z. B. Gewebe, Gewirke, Geflechte, unidirektionale oder multiaxiale Gelege zu applizieren. Diese textilen Halbzeuge können dann z. B. zu Briefformen weiter verarbeitet werden.

## Patentansprüche

1. Verfahren zur Herstellung eines Faserverbundwerkstoffes zur Herstellung von Faserverbundbauteilen, bestehend aus Verstärkungsfasern, Harz und einem Füllstoff, **dadurch gekennzeichnet, daß** der Füllstoff aus gemahlenen und/oder geschnittenen Verstärkungsfasern besteht.

2. Verfahren nach Anspruch 1, **dadurch gekennzeichnet, daß** die Teilchengröße des gemahlenen Füllstoffes kleiner als 2 mm ist.

3. Verfahren nach Anspruch 1 oder 2, **dadurch gekennzeichnet, daß** die Größe der Schnittfasern kleiner als 20 mm ist.

4. Verfahren nach einem oder mehreren der vorhergehenden Ansprüche, **dadurch gekennzeichnet, daß** das Mahlgut und/oder die geschnittenen Verstärkungsfasern mit dem Harz, der die spätere Matrix des Faserverbundbauteiles bildet, vermischt wird.

5. Verfahren nach einem oder mehreren der vorhergehenden Ansprüche, **dadurch gekennzeichnet, daß** die Harzfüllstoffmischung zu einem Film verarbeitet wird.

6. Verfahren nach Anspruch 5, **dadurch gekennzeichnet, daß** der Harzfüllstofffilm auf textile Halbzeuge, z. B. Gewebe, Geflechte, Gewirke, unidirektionale oder multiaxiale Gelege appliziert wird.

7. Verfahren nach einem oder mehreren der vorhergehenden Ansprüche, **dadurch gekennzeichnet, daß** der Harzfüllstofffilm als solcher in eine Bauteilform eingebracht wird, bevor die oder das eigentliche Textilhalbzeug z. B. als Vorformling in die Bauteilform kommt.

8. Verfahren nach einem oder mehreren der vorhergehenden Ansprüche, **dadurch gekennzeichnet, daß** die Harz-Füllstoffmischung in eine Bauteilform oder auf textiles Halbzeug in einem Sprühverfahren aufgebracht wird.

9. Verfahren nach einem oder mehreren der vorhergehenden Ansprüche, **dadurch gekennzeichnet, daß** die mit der Harz-Füllstoffmischung besprühten textilen Halbzeuge auch zur Herstellung von Vorformlingen genutzt werden.

## Claims

1. Process for manufacturing a fibre-composite material for the manufacture of fibre-composite components, consisting of reinforcing fibres, resin and a filler material, **characterised in that** the filler material consists of ground and/or cut reinforcing fibres.

2. Process according to claim 1 **characterised in that** the size of the particles of the ground filler material is less than 2 mm.

3. Process according to claims 1 or 2 **characterised in that** the size of the cut fibres is less than 20 mm.

4. Process according to one or more of the above claims, **characterised in that** the ground material and/or the cut reinforcing fibres are mixed with the resin which subsequently forms the matrix of the fibre-composite component.

5. Process according to one or more of the above claims, **characterised in that** the mixture of resin and filler material is processed to form a film.

6. Process according to claim 5 **characterised in that** the film of resin and filler material is applied to textile semifinished products, e.g. woven tissue, interwoven material, knitted fabric or unidirectional or multiaxial sandwich material.

7. Process according to one or more of the above claims, **characterised in that** the resin-filler film as such is placed in a component mould before the actual textile semifinished material (e.g. as a preform) is placed in the component mould.

8. Process according to one or more of the above claims, **characterised in that** the mixture of resin and filler material is applied to a component mould or to textile semifinished material by a spraying operation.

9. Process according to one or more of the above claims, **characterised in that** the textile semifinished products sprayed with the mixture of resin and filler material are also used to manufacture preforms.

## Revendications

1. Procédé pour réaliser un matériau composite fibreux entrant dans la fabrication d'éléments composites fibreux, comprenant des fibres de renforcement, de la résine et une matière de remplissage, **caractérisé en ce que** la matière de remplissage se compose de fibres de renforcement moulues et/ou coupées.

2. Procédé selon la revendication 1, **caractérisé en ce que** la taille des particules de la matière de remplissage moulue est inférieure à 2 mm.

3. Procédé selon la revendication 1 ou 2, **caractérisé en ce que** la taille des fibres coupées est inférieure à 20 mm.

4. Procédé selon une ou plusieurs des revendications précédentes, **caractérisé en ce que** l'on mélange la matière moulue et/ou les fibres de renforcement coupées avec la résine qui forme la matrice ultérieure de l'élément en matériau composite fibreux.

5. Procédé selon une ou plusieurs des revendications précédentes, **caractérisé en ce que** le mélange résine - matière de remplissage est transformé en film.

6. Procédé selon la revendication 5, **caractérisé en ce que** l'on applique le film composé de résine et de matière de remplissage sur des produits textiles semi-finis, p. ex. des textiles, treillis, tissus à mailles, couches unidirectionnelles ou multiaxiales.

7. Procédé selon une ou plusieurs des revendications précédentes, **caractérisé en ce que** l'on incorpore le film en tant que tel, composé de résine et de matière de remplissage, dans un moule à élément avant que le produit textile semi-fini proprement dit entre p. ex. sous forme d'ébauche prémoulée dans le moule à élément.

8. Procédé selon une ou plusieurs des revendications précédentes, **caractérisé en ce que** le mélange de résine et de matière de remplissage est appliqué au moyen d'un procédé de pulvérisation dans un moule à élément ou sur un produit textile semi-fini.

9. Procédé selon une ou plusieurs des revendications précédentes, **caractérisé en ce que** les produits semi-finis sur lesquels a été pulvérisé le mélange de résine et de matière de remplissage peut également servir à fabriquer des ébauches prémoulée.
